# EUROPEAN PATENT SPECIFICATION

(11) **EP 1 058 792 B1**
(45) Date of publication and mention of the grant of the patent: **24.08.2005**
(21) Application number: 98945710.6
(22) Date of filing: 22.09.1998
(51) Int. Cl.: F16C 33/78

(54) **BEARING SEALS**
LAGERABDICHTUNGEN
JOINTS DE ROULEMENT

(30) Priority: 23.02.1998 SE 9800517
(43) Date of publication of application: 13.12.2000
(73) Proprietor: SKF Sverige AB, 415 50 Göteborg (SE)
(72) Inventor: BUNDGART, Asbjörn, I-10020 Baldissero Torinese (IT)
(74) Representative: Westman, Per Börje Ingemar
(86) International application number: PCT/SE1998/001688
(87) International publication number: WO 1999/042737

(56) References cited:
- FR-A- 2 386 723
- GB-A- 2 174 766
- US-A- 4 692 040

## Description

### Technical field

The present invention relates to a bearing and a bearing seal combination.

The object of the present invention is to obtain a possibility of externally securing a bearing seal to a bearing and to improve the sealing properties of the bearing seal thereby.

A further object is to obtain a possibility of replacing the seal in a simple way at repair, on the after-market, and to provide sealing and bearing as one part in primary manufacturing.

### Background of the invention

Seals for bearing arrangements are used to prevent solid contaminants and moisture from penetrating into the bearing and at the same time to retain the lubricant in the bearing or bearing arrangement. Bearing seals generally provide a minimum of friction and cause a minimum of wear whilst maintaining their efficiency even under the most unfavourable conditions so that bearing performance and life are not adversely affected.

Bearings can be provided with seals which are made integral with the bearing and seals which are positioned outside the very bearing. The seals integral with the bearing are delivered ready sealed and lubricated from the manufacturer and they are generally well suited for preventing penetration of contaminants from the outside in common environments.

In cases with extraordinary quantities of contaminants, such as e.g., at bearings for use in agricultural equipment there is, however, required particular, externally mounted seals. When mounted at the manufacturer of the implement to which it belongs, the skilled person in the art will of course mount and seal the bearing in a correct way, so that the bearing will operate correctly to ascertain external contaminants from entering the bearing. However, when such bearings shall be replaced this will often take place in the field, i.e., not always by personnel skilled in the art, and thus there is a risk that the seal will be incorrectly applied, leading to undue contamination of the inner of the bearing, and leakage or destruction of the lubricating properties. The ultimate course of action is a breakdown of the bearing.

Thus, as indicated above, one object of the present invention is to provide a combination of bearing and external seal which can be mounted and handled as a unit. This is advantageous not only for untrained personnel at after-mounting, but also at manufacture of the implement to which the sealed bearing shall be mounted, as such a unit means easy mounting and a fewer separate components to store, handle and mount.

Many factors have to be considered when choosing the right type of seal, such as type of lubrication, peripheral speed at the sealing surface, horizontal or vertical shaft arrangement, available space, friction in the seal, costs and other considerations.

Bearing seals are commonly used to protect bearings mounted on shafts against dirt and water and are particularly used in heavy environments, such as agricultural applications, heavy industries, etcetera. Such seals are known in a great variety of embodiments. One main type is a sliding seal, which incorporates a sealing body of a resilient material being affixed to one of the bearing rings and at the free end having at least one sealing lip slidingly contacting the other bearing ring or a member attached to said other bearing ring. This type of seals are provided as integral seals or as external seats. Another main type of seals, often used as external seal, comprises two bodies, a first body connected to the rotating bearing ring and a second body connected to the stationary bearing ring. The two bodies form together a labyrinth seal, preventing penetration of contaminants, moisture and lubricant. Bearing seals being combinations of sliding seals and labyrinth seals are also used.

The resilient member can be made of one, two or more parts, depending on the construction of the seal as such. A common feature is the resilient sealing lip facing a co-operating sealing surface and which sealing lip in many cases is urged against the co-operating sealing surface by means of an annular spring.

Different sealing arrangements are known from EP-A1-0 241 581; EP-A2-0 519 654; and US-A-5,024,449, which references show different types of seals attached to roller bearings, and ball bearings.

The seals disclosed in these publications are no real combinations with the bearings.

A bearing and a bearing seal combination is disclosed in FR-A-2 386 723 being the closest prior art, and this combination comprises a bearing including an inner race ring, an outer race ring with an axial end surface and an annular space defined between said race rings,
a seal in the form of a cylindrical annular body that is in sealing contact with the outer race ring of the bearing, the annular body including an annular shield member and a resilient annular sealing member fitted to said shield member and projecting from the shield member to slidingly and sealingly contact a sealing surface to thereby sealingly bridge said annular space between the inner and outer race rings, the annular body being detachably mounted to the outer race ring by way of an annular bulge provided on the resilient member that is mounted by snap-action in a circumferential groove provided in an inner surface of the outer race ring of the bearing, and said annular body being provided with a radially extending wall portion that is axially displaced from the annular bulge and which engages the axial end surface of the outer race ring.

This known bearing and seal combination prevents moisture, dust and dirt from penetrating into the bearing, whereas there is a risk that such foreign matters may enter between the bearing outer ring and a housing in which the bearing is arranged.

### Description of the present invention

It has now been found possible to solve this problem by means of the present invention, which is characterized in that the annular body has a portion extending axially outside the outer race ring of the bearing, said body portion being provided with means for sealing contact, in axial and/or radial direction against a bearing housing surrounding the outer race ring of the bearing.

Further characteristics will be evident from the accompanying claims.

By means of the present invention a cassette seal can be readily attached to its bearing by a simple snap-in action, thereby providing a more simple attachment thereof, together with improved sealing capacity.

The present invention will now be described with reference to the attached drawing showing different embodiments of the invention, however, without the invention being restricted thereto.

In the drawings
FIG. 1 shows a cross-sectional view of a portion of a ball bearing provided with a bearing seal according to the prior art.
FIG. 2 is a corresponding view showing a portion of a ball bearing with a bearing seal
FIG. 3 is a combination of bearing and seal mainly corresponding to FIG. 1.
FIG.s 4-5 show in corresponding views two embodiments in accordance with the present invention.

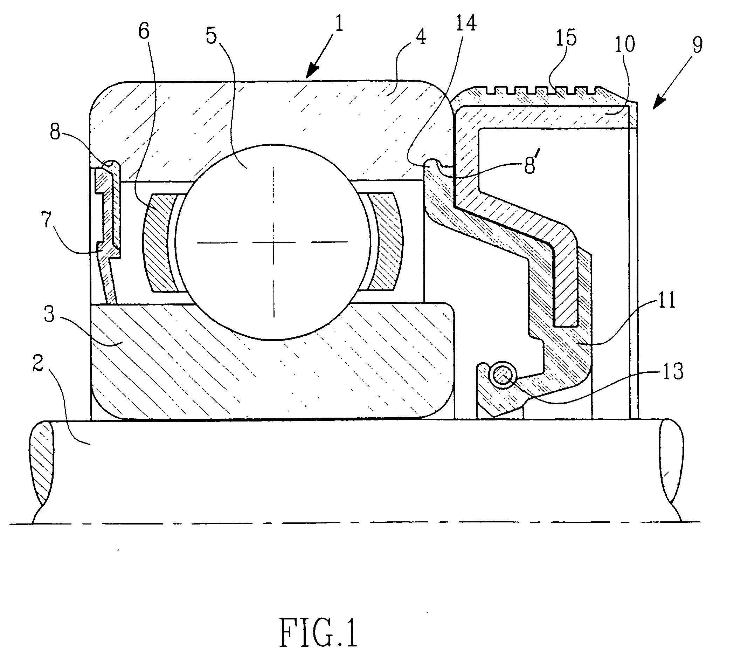

In FIG. 1 is shown a prior art seal and bearing combination incorporating a ball bearing 1 arranged on a shaft 2 and comprising an inner race ring 3 and an outer race ring 4 with a set of balls 5 provided between said rings and being kept separated and guided in a cage 6. At one axial side of the bearing the space between the two race rings 3, 4 is sealed off by means of a commonly used integral seal 7, being attached in a circumferential annular groove 8, normally provided in the inner envelope surface of the outer race ring 4 axially outside the balls 5.

At the opposite axial side of the ball bearing 1 is positioned a cassette seal 9, which is placed outside the bearing, and which incorporates a cylindric, annular body having substantially the same outer diameter as the ball bearing 1. The cylindrical annular body incorporates a shield portion 10, and a resilient member 11 fitted to the shield member 10 and having a sealing lip 12, arranged to be in sliding and sealing contact with the envelope surface of the shaft 2, when mounted to the bearing 1. In a common manner an annular spring member 13 is arranged to urge the lip 12 of the resilient member 11 against the co-operating sealing surface, i.e. in this case the envelope surface of the shaft 2. The resilient member 11 has an outwardly facing edge provided with a bulge 14, which can be inserted in the existing annular groove 8' on the inner envelope surface of the outer race ring 4 by snap-action thus that the seal 9 will be detachably retained in the groove 8' when subjected only to moderate or low external forces. Thereby the seal 9 will be easily attachable to the bearing without the need of providing particular means or elements for attachment of the external seal to the bearing. The radially outer edge of the shield portion 10 of the seal 9 is preferably provided with a resilient lining 15 for increasing the grip and sealing effect against a (not shown) seat in which the bearing with seal is to be mounted.

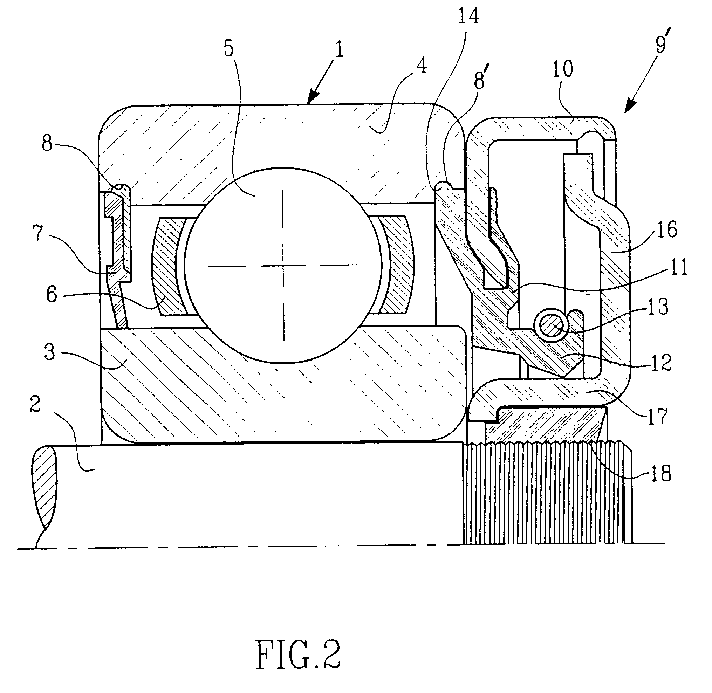

In FIG. 2 is shown a slightly different embodiment of a bearing and seal combination, wherein the same reference numerals have been used for elements common to both embodiments. Thus the embodiment according to this figure incorporates a bearing 1 arranged in a proper, not further shown manner on a shaft 2 and having inner and outer race rings 3,4, balls 5 guided in a cage 6 provided therebetween, an integral lip seal 7, known per se, arranged at one axial side outside the balls 5 in a groove 8 in the outer race ring 4 and a cassette seal 9' fitted in a groove 8' at the opposite axial side of the bearing. This cassette seal 9' incorporates an annular shield portion 10 and a resilient member I 1 fitted to the shield member 10 and having a sealing lip 12, arranged to be in sliding and sealing contact with the envelope surface of a flange 17 of a further cylindrical annular body 16 fixed to the shaft 2 via cooperating threads 18. The annular body 10,14 and the further annular body 16 thereby are concentrically arranged. The two annular bodies 12 and 14 form together a space between them, in which the lip 12 of the resilient member 11 is positioned in sliding and sealing contact with the flange 17 of the further annular member 16. An annular spring 13 is arranged to press the sealing lip towards sealing position. The resilient member 11 can be vulcanized to the shield member 10 if so desired. The outwardly facing edge of the resilient member 11 is provided with a bulge 14, which fits into said groove 8' of the outer race ring 4 of the bearing 1, by means of which the cassette seal 11 can be readily attached to the bearing 1 by a snap-action thereby providing easy mounting and correct tight sealing.

Although this embodiment incorporates two separate elements, which are not fixedly attached to each other, the friction between the sealing lip 12 and its co-operating sealing surface 17 is high enough to maintain the two elements as a unit under normal handling, also prior to its mounting to the bearing.

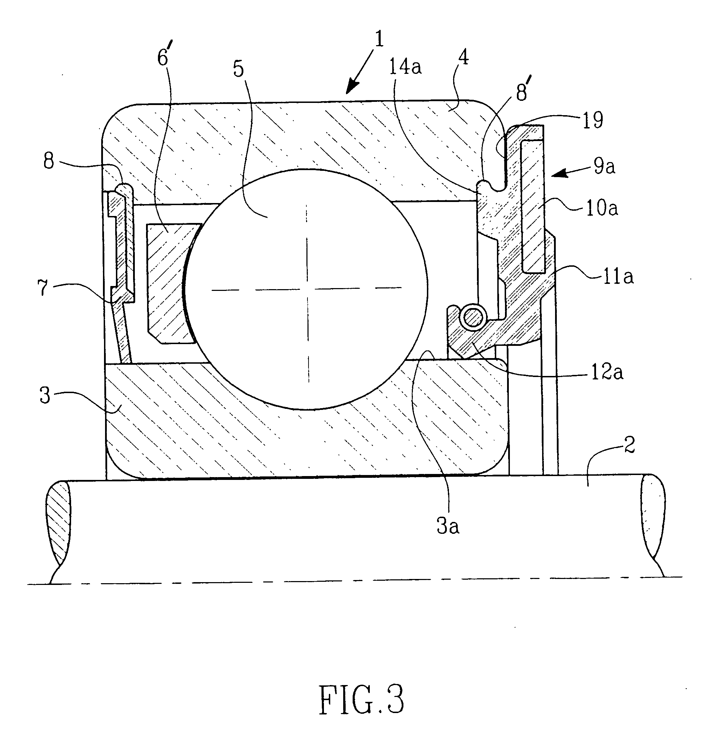

The prior art embodiment shown in Fig. 3 is intended for applications wherein one requirement is that the sealed bearing shall have such a small axial width as possible and this embodiment incorporates a ball bearing 1 mounted on a shaft 2 and having an inner race ring 3, an outer race ring 4, a number of balls 5 provided between the race rings and guided by a cage 6'. In this embodiment the cage 6' is a cage of the type having a ring portion and a number of prongs extending axially therefrom and forming between adjacent prongs axially open pockets for the balls 5. By using such a cage the space between the race rings 3, 4 at one axial side of the row of balls will be free from cage portions, which differs from the embodiments according to FIGs. 1 and 2.

One side of the bearing - the side towards which the ring of the cage 6' is turned - has a sealing arrangement 7, 8, corresponding to that of the previous embodiments, whereas the other side of the bearing has a seal 9a incorporating an annular shield portion 10a and a resilient member 11a fitted thereto and bridging the space between the race rings 3, 4. The resilent member is provided with an annular bulge 14a, which is received in a circumferential groove 8' in the inner envelope surface of the outer race ring 4. The bulge 14a is so dimensioned that it can be inserted into said groove 8' by snap-action and thus that it is retained in position during normal operation of the bearing. The resilient member 11a is also provided with a sealing lip 12a, arranged to slide against the land 3a of the inner race ring 3. The seal 9a is further provided with a portion 19 extending radially outwards from the bulge 14a and being offset axially so far from this that the face of said radial seal portion 19 will engage the side face of the outer race ring when the bulge is positioned in the groove 8a. At assembly of the sealed bearing it is therefor easy to push in the seal to its correct position.

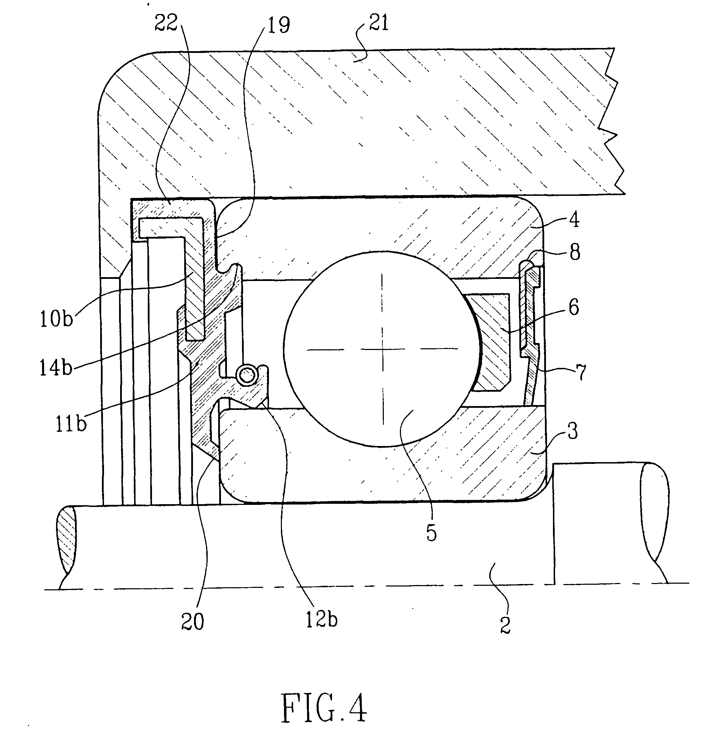

Fig. 4 shows an embodiment of the seal and bearing combination according to the invention, wherein the bearing is arranged in a housing 21, only a part of which is shown. The arrangement in this embodiment is designed in the same manner as that shown in Fig. 3, with the shield 10b, the resilient member 11b and a sealing lip 12b sealingly sliding against the land of the inner race ring of the bearing, and with an annular bulge 14b fitted by snap-action in the internal groove in the outer race ring. In this embodiment the resilient member 11b has a further sealing lip 20 arranged to engage the side face of the inner race ring 3. The outer radial portion 19 of the seal engages the side face of the outer race ring 4, and the radially outermost portion of the seal is provided with a cylindrical portion 22 engaging the seat in the housing 21.

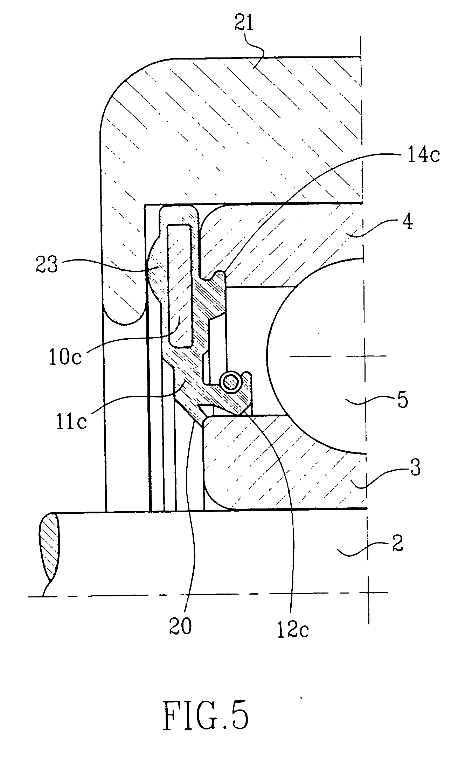

Fig. 5 shows another embodiment of the invention similar to that according to Fig. 4, with the difference that the seal has no cylindrical portion 22, but instead an annular bead 23 arranged to engage a radial surface of the housing 21, when the bearing is mounted in the housing with the seal in correct position. The other portions of the seal, here shown with the suffix "c", are otherwise similar or have the same function as the corresponding members, having the suffix "b" in Fig. 4.
With the designs shown in Fig.s 4 and 5 the sealed bearing unit will be securely centered in the bearing housing and the engaging portions 22 and 23, respectively, will also provide a sealing effect preventing dirt and moisture from reaching the surface of the bearing housing in which the bearing is seated.

The invention is not limited to the embodiments shown in FIGs. 4 and 5 of the drawings and described in connection thereto, but modifications and variants are possible within the scope of the appended claims.

Thus the seal has been described in connection with a ball bearing, however, a great number of other types of bearings can be contemplated for the use, such as roller bearings, needle bearings, and others.

## Claims

1. A bearing and a bearing seal combination comprising:
a bearing including an inner race ring (3), an outer race ring (4) with an axial end surface and an annular space defined between said race rings (3, 4);
a seal in the form of a cylindrical annular body that is in sealing contact with the outer race ring (4) of the bearing; the annular body including an annular shield member (10b, 10c) and a resilient annular sealing member (11b, 11c) fitted to said shield member and projecting from the shield member to slidingly and sealingly contact a sealing surface to thereby sealingly bridge said annular space between the inner and outer race rings; the annular body being detachably mounted to the outer race ring (4) by way of an annular bulge (14b, 14c) provided on the resilient annular sealing member (11b, 11c) and mounted by snap-action in a circumferential groove provided in an inner surface of the outer race ring (4) of the bearing; and said annular body being provided with a radially extending wall portion (19) which is axially displaced from the annular bulge (14b, 14c) and which engages the axial end surface of the outer race ring (4),
**characterized in**
**that** the annular body has a portion (22; 23) extending axially outside the outer race ring (4) of the bearing, said body portion being provided with means for sealing contact, in axial and/or radial direction against a bearing housing (21) surrounding the outer race ring (4) of the bearing.

2. A bearing and a bearing seal combination as claimed in claim 1,
**characterized in**
**that** the radially extending wall portion (19) of the annular body is constituted by a portion of the resilient annular sealing member (11b, 11c).

3. A bearing and a bearing seal combination as claimed in claim 1 or 2,
**characterized in,**
**that** the sealing surface against which the resilient annular sealing member (11b, 11c) contacts slidingly and sealingly is constituted by the inner envelope surface of the inner race ring (3) of the bearing.

## Patentansprüche

1. Lager und Kombination aus Lager und Dichtung, umfassend:
ein Lager mit einem inneren Laufring (3), einem äußeren Laufring (4) mit einer axialen Endfläche und einem ringförmigen Zwischenraum zwischen den Laufringen (3, 4); eine Dichtung in der Form eines zylindrischen ringförmigen Körpers, die in abdichtendem Kontakt mit dem äußeren Laufring (4) des Lagers steht;
wobei der ringförmige Körper ein ringförmiges Schildelement (10b, 10c) und ein elastisches ringförmiges Dichtungselement (11b, 11c) aufweist, das an dem Schildelement befestigt ist und von dem Schildelement hervorsteht, um eine Dichtungsfläche gleitend und abdichtend zu berühren und **dadurch** den ringförmigen Zwischenraum zwischen den inneren und äußeren Laufringen abdichtend zu überbrücken; der ringförmige Körper an dem äußeren Laufring (4) mittels einer ringförmigen Auswölbung (14b, 14c), die auf dem elastischen ringförmigen Dichtungselement (11b, 11c) vorgesehen ist, und mittels Schnappwirkung in einer Umfangsrille abnehmbar befestigt ist, die in einer inneren Oberfläche des äußeren Laufrings (4) des Lagers vorgesehen ist; und der ringförmige Körper mit einem sich radial erstreckenden Wandbereich (19) versehen ist, der von der ringförmigen Auswölbung (14b, 14c) axial versetzt ist und der an der axialen Endfläche des äußeren Laufrings (4) angreift,
**dadurch gekennzeichnet,**
**daß** der ringförmige Körper einen Bereich (22; 23) besitzt, der sich axial außerhalb des äußeren Laufrings (4) des Lagers erstreckt, wobei dieser Körperbereich mit Mitteln zum Dichtungskontakt in axialer und/oder radialer Richtung gegen ein Lagergehäuse (21) versehen ist, das den äußeren Laufring (4) des Lagers umgibt.

2. Lager und Lagerabdichtungskombination nach Anspruch 1,
**dadurch gekennzeichnet,**
**daß** der sich radial erstreckende Wandbereich (19) des ringförmigen Körpers durch einen Bereich des elastischen ringförmigen Dichtungselements (11b, 11c) gebildet ist.

3. Lager und Lagerabdichtungskombination nach Anspruch 1 oder 2,
**dadurch gekennzeichnet,**
**daß** die durch das elastische ringförmige Dichtungselement (11b, 11c) gleitend und abdichtend berührte Dichtungsfläche durch die innere Mantelfläche des inneren Laufrings (3) des Lagers gebildet ist.

## Revendications

1. Combinaison de joint de roulement et de roulement comprenant :
un roulement comprenant une bague de roulement intérieure (3), une bague de roulement extérieure (4) avec une surface d'extrémité axiale et un espace annulaire défini entre lesdites bagues de roulement (3, 4) ;
un joint sous la forme d'un corps annulaire cylindrique qui est en contact d'étanchéité avec la bague de roulement extérieure (4) du roulement ; le corps annulaire comprenant un élément de protection annulaire (10b, 10c) et un élément d'étanchéité annulaire élastique (11b, 11c) monté sur ledit élément de protection et faisant saillie depuis l'élément de protection pour entrer en contact étanche et coulissant avec une surface d'étanchéité pour ainsi former un pont étanche au-dessus de l'espace annulaire entre les bagues de roulement intérieure et extérieure ; le corps annulaire étant monté de manière amovible sur la bague de roulement extérieure (4) au moyen d'un renflement annulaire (14b, 14c) placé sur l'élément d'étanchéité annulaire élastique (11b, 11c) et monté par emboîtement dans une rainure circonférentielle pratiquée dans une surface intérieure de la bague de roulement extérieure (4) du roulement ; et ledit corps annulaire étant pourvu d'une partie de paroi s'étendant radialement (19) qui est décalée axialement par rapport au renflement annulaire (14b, 14c) et qui vient en prise avec la surface d'extrémité axiale de la bague de roulement extérieure (4),
**caractérisée en ce que** le corps annulaire a une partie (22; 23) s'étendant axialement à l'extérieur de la bague de roulement extérieure (4) du roulement, ladite partie de corps étant pourvue de moyens pour un contact étanche, dans une direction axiale et/ou radiale contre un carter de roulement (21) entourant la bague de roulement extérieure (4) du roulement.

2. Combinaison de joint de roulement et de roulement selon la revendication 1, **caractérisée en ce que** la partie de paroi s'étendant radialement (19) du corps annulaire est constituée d'une partie de l'élément d'étanchéité annulaire élastique (11b, 11c).

3. Combinaison de joint de roulement et de roulement selon la revendication 1 ou 2, **caractérisée en ce que** la surface d'étanchéité contre laquelle l'élément d'étanchéité annulaire élastique (11b, 11c) entre en contact étanche et coulissant est constituée par la surface d'enveloppe intérieure de la bague de roulement intérieure (3) du roulement.
